# EUROPÄISCHE PATENTANMELDUNG

(11) **EP 0 989 254 A2**
(43) Veröffentlichungstag der Anmeldung: **29.03.2000**
(21) Anmeldenummer: 99116879.0
(22) Anmeldetag: 06.09.1999
(51) Int. Cl.: E04D 13/17, E04D 1/36, E04D 3/40

(54) **Dichtungsstreifen für eine First- oder Gratabdeckung und Verfahren zu deren Herstellung**

(30) Priorität: 18.09.1998 DE 29816718 U; 24.08.1999 DE 29914795 U
(71) Anmelder: Verwaltungsgesellschaft Bleiindustrie GmbH & Co. KG vorm. Jung + Lindig, 22525 Hamburg (DE)
(72) Erfinder: Ernst, Johannes, 22339 Hamburg (DE)
(74) Vertreter: Richter, Werdermann & Gerbaulet

(57) **Zusammenfassung**

Zur First- oder Gratabdeckung ist ein Dichtungsstreifen (200) aus weichplastischem Werkstoff mit einem zur Auflage auf einer First- oder Gratbohle (15) bestimmten und mit Löchern (18) versehenen Belüftungsbereich (25) und zu beiden Seiten daran angrenzenden Formbereichen (24), die an die Oberseite von dem First- oder Gratbereich eines Daches verlegten Dachziegeln (14) anpaßbar sind, zweiteilig ausgebildet ist, der aus einem ersten Dichtungsstreifenteil (100) und einem zweiten Dichtungsstreifenteil (100') besteht, wobei beide Dichtungsstreifenteile (100, 100') gleich ausgebildet sind und jeder Dichtungsstreifenteil (100; 100') aus einem zur Auflage auf der First- oder Gratbohle (15) bestimmten und mit Löchern versehenen Belüftungsbereich (25) und einem daran angrenzenden, mit dem Belüftungsbereich (25) verbundenen Formbereich (24) besteht, der an die Oberseite von dem First- oder Gratbereich des Daches verlegten Dachziegeln (14) anpaßbar ist, und daß die beiden Dichtungsstreifenteile (100; 100') mit sich überlappenden (100a) oder miteinander verbundenen Belüftungsbereichen (15) auf der First- oder Gratbohle (15) aufliegend angeordnet sind, so daß die Form-bereiche (24) der beiden Dichtungsstreifenteile (100, 100') zu beiden Seiten der First- oder Gratbohle (15) auf den Dachziegeln (14) aufliegend sind.

## Beschreibung

Die Erfindung betrifft einen Dichtungsstreifen gemäß dem Oberbegriff des Anspruches 1.

Dichtungsstreifen der eingangs genannten Art sind aus der DE 195 37 266 A1 bekannt. Derartige Dichtungsstreifen werden unter dem Schlußziegel eines Firstes oder eines Grates verlegt, um den Stoß der beiden dort aneinandergrenzenden Dachflächen abzudichten.

Durch den mit Löchern versehenen Belüftungsbereich des Dichtungsstreifens wird dabei eine Be- und Entlüftung des Dachinnenraumes gewährleistet. Die Wahl eines weichplastischen Werkstoffes und die Plastizität des Formbereiches dienen dazu, daß der Dichtungsstreifen den Dachziegeln genau angepaßt werden kann und somit einen guten Halt und eine gute Abdichtung garantiert. Der in der DE 195 37 266 A1 offenbarte Dichtungsstreifen ist symmetrisch bezüglich seiner Mittelachse ausgebildet. An den Seitenrändern des Streifens verlaufen Formbereiche, die eine Plissierung aufweisen, um die geforderte Anpaßbarkeit an die Oberfläche des Daches zu erzielen. An die Formbereiche schließen sich jeweils zwei Belüftungsbereiche mit Löchern an, welche in der Mitte des Dichtungsstreifens durch einen ungelochten Mittelabstand verbunden sind. Beim Verlegen des Dichtungsstreifens wird dieser über den First oder Grat von einer Rolle abgerollt. Nachteilig bei einem derartigen Dichtungsstreifen ist, daß die Vorratsrolle des Streifens, dessen Breite typischerweise 300mm beträgt, verhältnismäßig schwer und unhandlich werden. Ferner muß der Dichtungsstreifen in seiner gesamten Breite ersetzt werden, wenn er an einer Seite beschädigt sein sollte. Schließlich ist der symmetrische Aufbau des Dichtungsstreifens nicht immer optimal, z.B. dann nicht, wenn die beiden Dachstreifen asymmetrisch sind.

Zur Abdichtung der First- oder Gratabdeckung eines Schrägdaches ist nach der DE 38 16 015 A1 ein Dichtungsstreifen bekannt, der einen Mittelstreifen mit einem luftdurchlässigen, wasserabweisenden und flugschneesicheren Vlies aufweist, an den Seitenstreifen grenzen, die mit dem Mittelstreifen einstückig ausgebildet und die wenigstens mit ihren äußeren Längsrändern an die Oberseite von Dacheindeckungsplatten anpreßbar sind, wobei die Seitenstreifen jeweils aus weichem, dehnbaren Polyisobutyl-Folienstreifen bestehen, in welchen ein Streckmetallgitter eingebettet ist, das in Längsrichtung eine Dehnbarkeit von 50 bis 150% und in Querrichtung eine Dehnbarkeit ≤ 20% und ein Rückstellvermögen ≤ 5% aufweist. Längs- und Querdehnung werden hier durch ein eingelassenes Streckmetallgitter erreicht. Weder die Seitenstreifen noch die Längsränder sind mit einer Plissierung versehen, um eine gute Anpaßbarkeit an die Konturen der Dacheindeckungsplatten zu erreichen.

Die EP 0 117 391 B1 beschreibt eine First- oder Gratabdeckung für mit Dacheindeckungsplatten eingedeckte Dächer. Diese Abdeckung besteht aus auf der First- oder Gratbohle der Dachkonstruktion befestigten, den oberen Abschluß des Firstes oder Grates bildenden Abdeckkappen, sowie aus zwischen diesen und den Dacheindeckungsplatten angeordneten biegsamen Dichtungsstreifen, die mit ihren den Dacheindeckungsplatten zugekehrten Längsrändern auf diesen aufliegen, wobei die Dichtungsstreifen jeweils einen biegsamen Trägerstreifen aufweisen, der an einem oder beiden Längsrändern mit einem Randteil aus elastisch verformbarem Material versehen ist, der sich mit seinem äußeren Längsrand an die Oberseite der darunterliegenden Dacheindeckungsplatten anschmiegt, wobei der Randteil kammartig ausgebildet ist, und die Zähne des Randteils, mit einem die Zahnlücken überbrückenden Randstreifen aus flexiblem Material auseinanderspreizbar verbunden sind. Ein derartig ausgebildeter Dichtungsstreifen paßt sich aufgrund der Auseinanderspreizbarkeit des kammartig ausgebildeten Randteils aus elastischem Material und des die Zahnlücken überbrückenden Randstreifens aus flexiblem Material satt an die verschiedensten Oberflächen an, wodurch dieser Dichtungsstreifen bei Dacheindeckungen mit beliebigen Dacheindeckungsplatten sowie bei beliebigen Dachneigungen universell verwendbar sein sollen. Allerdings ist hier sowohl in Querrichtung als auch in Längsrichtung keine hohe Anpaßbarkeit gegeben.

Das Abdeckband aus flexiblem Flachbahnmaterial zur Abdeckung eines Firstes oder Grates eines mit plattenförmigem Material gedeckten Schrägdaches besteht darin, daß auf der Unterseite des Abdeckbandes in Querrichtung voneinander beabstandet mehrere formstabile luftdurchlässige Abstandshalter mit im wesentlichen hutförmigen Querschnitt angeordnet sind. Mit diesem Abdeckband soll erreicht werden, daß auf der Unterseite des Abdeckbandes in Querrichtung voneinander beabstandet mehrere formstabile luftdurchlässige Abstandshalter mit im wesentlichen hutförmigen Querschnitt angeordnet sind.

Aufgabe der vorliegenden Erfindung ist es, einen Dichtungsstreifen der eingangs genannten Art derart zu verbessern, daß seine Bevorratung und Verarbeitung erleichtert wird und seine Breite in Anpassung an unterschiedliche First- oder Gratbereiche veränderbar ist. Ferner soll eine leichtere Reparatur eines beschädigten Dichtungsstreifen möglich sein, und der Dichtungsstreifen soll optimal an die Anforderungen des Daches anpaßbar sein. Des weiteren soll erreicht werden, daß der Dichtungsstreifen leicht verarbeitbar und verformbar ist, sich bei gleichzeitigem Korrosionsschutz der Umgebungsfarbe anpaßt, im Aufliegebereich vollflächig klebend ist und sich trotz geringer Materialstärke in allen Richtungen verformen und abbiegen läßt, ohne daß dabei eine Materialausdünnung in den Biegebereichen eintritt.

Diese Aufgabe wird durch die in Anspruch 1 wiedergegebenen Merkmale gelöst.

Demnach ist der Dichtungsstreifen zweiteilig ausgebildet und besteht aus zwei gleich ausgebildeten Dichtungsstreifenteile, von denen jeder Dichtungsstreifenteil aus einem zur Auflage auf der First- oder Gratbohle bestimmten und mit Löchern versehenen Belüftungsbereiche und einem daran angrenzenden, mit dem Belüftungsbereich verbundenen Formbereich besteht, der an die Oberseite von dem First- oder Gratbereich des Daches verlegten Dachziegeln anpaßbar ist, wobei die beiden Dichtungsstreifenteile mit sich überlappenden oder miteinander verbundenen Belüftungsbereichen auf der First- oder Gratbohle aufliegend angeordnet sind, so daß die Formbereiche der beiden Dichtungsstreifenteile zu beiden Seiten der First- oder Gratbohle auf den Dachziegeln aufliegend sind.

Zur vollständigen Abdeckung eines Firstes werden zwei derartige Dichtungsstreifenteile benötigt, die spiegelsymmetrisch zueinander so zu verlegen sind, daß sie mit ihren Belüftungsbereichen auf der First- oder Gratbohle zusammenstoßen bzw. in diesem Bereich überlappen.

Dabei ist durch die gelochten Ränder der Belüftungsbereiche sichergestellt, daß sich die beiden Dichtungsstreifenteile miteinander verbinden oder überlappen lassen. Diese Zweiteilung einer kompletten Dachabdichtung hat zum einen den Vorteil, daß die auf einer Rolle zu bevorratende Breite des Dichtungsstreifenteils auf die Hälfte reduziert wird. Damit reduziert sich auch das Gewicht einer Vorratsrolle bei gleicher Länge des Dichtungsstreifenteils auf die Hälfte. Die Rolle läßt sich daher erheblich besser handhaben, was gerade bei Arbeiten im Dachbereich von großer Bedeutung ist. Ein weiterer Vorteil der Erfindung tritt dann zutage, wenn das Dichtungsstreifenteil an einer Stelle schadhaft geworden sein sollte und daher repariert werden muß. In diesem Falle reicht es, das defekte Dichtungsstreifenteil auf einer Seite des Daches durch einen neuen Streifen zu ersetzen. Zu diesem Zweck wird die Verbindung mit dem gegenüberliegenden Dichtungsstreifenteil gelöst, und das neue Dichtungsstreifenteil wird in Verbindung eingesetzt.

Darüber hinaus hat die Erfindung den Vorteil, daß die Abdeckung des Firstes oder Grates eines Daches besser an die individuellen Erfordernisse angepaßt werden kann. Das erfindungsgemäße Dichtungsstreifenteil liegt nämlich nur in einer Breite vor uns weist auf seinen beiden Seiten Farbbeschichtungen in unterschiedlichen Farben, z.B. rot und grau auf, mit Ausnahme bei einem Material, das aus Kupfer besteht; dann erfolgt keine Farbbeschichtung. Es ist somit möglich, zwei Dichtungsstreifenteile mit ihren jeweiligen gelochten Belüftungsbereichen zu einer einheitlichen Abdeckung aneinanderzusetzen, wobei für jede Seite des Daches das optimale (Teil-) Dichtungsstreifenteil ausgewählt werden kann.

Dadurch, daß der den First- oder Gratbereich abdeckende Dichtungsstreifen aus zwei Dichtungsstreifenteilen gleicher Ausgestaltung besteht, braucht nur ein Dichtungsstreifenteil auf Lager gehalten zu werden. Durch diese Zweiteiligkeit des Dichtungsstreifens ist eine Breitenvariation im Überlappungsbereich der beiden Dichtungsstreifenteile möglich. Da der gelochte Belüftungsbereich der Dichtungsstreifenteile aus Aluminium, Kupfer, Blei oder Bleiverbundstoffen besteht, ist auch eine hohe Eigenstabilität der Dichtungsstreifenteile im First- oder Gratbereich gegeben.

Eine weitere Ausgestaltung der Erfindung sieht vor, daß die beiden Dichtungsstreifenteile mit ihren Belüftungsbereichen überlappend auf der First- oder Gratbohle liegend angeordnet und mit dieser über eine Schraub- oder Nagelverbindung verbunden sind.

Jedoch können die beiden Dichtungsstreifenteile im Bereich der Außenränder ihrer Belüftungsbereiche über eine im Bereich der First- oder Gratbohle liegende Falzverbindung miteinander verbunden sein.

Zur Breitenveränderung des Dichtungsstreifens können die beiden Dichtungsstreifenteile mit ineinandergreifenden, quer zur Dichtungsstreifenlängsrichtung verlaufenden Profilierungen versehen sein, und da z.B. beide Dichtungsstreifenteile an der First- oder Gratbohle festgenagelt sind, ist ein Verschieben der beiden Dichtungsstreifenteile ausgeschlossen.

Die Dichtungsstreifenteile bestehen vorzugsweise aus Metall, insbesondere aus Weichaluminium, weichgeglühtem Kupferblech, Bleiblech oder zinnplattiertem Bleiblech. Weichaluminium hat den Vorteil, hoch UV-beständig zu sein; Ganzmetallprodukte haben den Vorteil, daß sie aufgrund ihres Eigengewichts eine hohe Lagenstabilität des Dichtungsstreifens bewirken. Hierdurch reicht es in der Regel, die Dichtungsstreifenteile lose auf den First oder Grat zu legen und an die Form der Dachziegel anzupassen. Ein geeignetes Material für die Dichtungsstreifenteile sind auch Sandwichfolien mit Bleischichten. Besonders geeignet ist ein zinnplattiertes Bleiblech, wie es in der EP 0 856 398 B1 beschrieben wird, und bei welchem die Zinnplattierungsschicht aus einer zinnhaltigen Legierung folgender Zusammensetzung besteht: 0,15 bis 0,85% Sn, 0,05 bis 0,15% Sb, 0,03 bis 0,06% Cu, 0,01 bis 0,10% Bi, 0,10% sonstige Beimengungen und im übrigen Pb. Die Außenseite der Zinnplattierungsschicht kann mit einer Lack- oder Klebeschicht versehen sein.

Der Formbereich der Dichtungsstreifenteile weist vorzugsweise eine wesentlichen quer zur Längsachse des Dichtungsstreifens ausgerichtete Plissierung auf. Durch die Plissierung in Form von Wellen oder Falten im Material wird erreicht, daß überall eine lokale Längenstreckung des Materials möglich ist, indem die Falten geglättet werden. Derartige Steckungen sind in der Regel bei der Anpassung der Dichtungsstreifenteile an die Oberfläche des Daches erforderlich, da durch die Dachziegel und/oder durch die Platten eine stark unebene Oberfläche abzudecken ist.

Am Rand des Formbereiches der Dichtungsstreifenteile kann ein Klebemittelstreifen angeordnet sein, welcher vor Gebrauch vorzugsweise mit einer Schutzfolie abgedeckt ist. Mit Hilfe des Klebestreifens kann das Dichtungsstreifenteil auf den obersten Dachziegeln festgeklebt werden. Eine solche Fixierung ist insbesondere bei Dichtungsstreifenteilen aus einem verhältnismäßig leichten Material sinnvoll. Ferner ist sie bei der Verlegung der Dichtungsstreifenteile hilfreich, um diese vor einem Abrutschen zu sichern und um die einmal eingestellte Ausrichtung des Streifens beizubehalten. Eine solche Fixierung während der Montage ist insbesondere bei dem erfindungsgemäßen zweigeteilten Dichtungsstreifen vorteilhaft, bei welchem nicht von vornherein eine Balance der Gewichte zu beiden Seiten des Daches hin vorhanden ist. Letztere kann jedoch auch auf andere Art als mit Klebestreifen hergestellt werden, z.B. indem zwischenzeitlich in Abständen Ausgleichgewichte am Dichtungsstreifenteil befestigt und zur gegenüberliegenden Dachseite übergehängt werden.

Jedes Dichtungsstreifenteil weist parallel zu seiner Längsachse ein Markierungsmittel auf, welches vorzugsweise durch den gelochten Belüftungsbereich verläuft. Bei dem Markierungsmittel kann es sich insbesondere um eine Sicke und/oder einen Farbstreifen handeln. Die genannten Markierungsmittel dienen als Orientierungshilfe beim Verlegen der Dichtungsstreifenteile. Dies ist insbesondere dann sinnvoll, wenn die Dichtungsstreifenteile nicht auf einmal komplett von der Rolle abgerollt und über den First gelegt werden können, so daß ein über die gesamte Länge sich erstreckendes Ausrichten der einzelnen Dichtungsstreifenteile möglich ist.

Der Durchmesser der Löcher im Belüftungsstreifen wird vorteilhafterweise so gewählt, daß das Eindringen von Insekten durch diese Löcher nicht möglich ist. Ferner sollten auch Flugschnee und Feuchtigkeit abgehalten werden. Dies wird z.B. dann erreicht, wenn die Löcher so klein sind, daß die Oberflächenspannung von Wasser ein Eindringen des Wassers verhindert. Die Löcher können auch mittels eines Insektengitters abgedeckt sein.

Vorteilhafte Ausgestaltungen der Erfindung sind Gegenstand der Unteransprüche.

Die Erfindung betrifft ferner ein Verfahren zur Abdichtung einer First- oder Gratabdeckung mit einem zweiteiligen Dichtungsstreifen der oben erläuterten Art, welches dadurch gekennzeichnet ist, daß zunächst auf einer Seite des Daches ein erster Dichtungsstreifenteil so verlegt wird, daß der gelochte Belüftungsbereich auf der First- oder Gratbohle aufliegt, daß dann spiegelsymmetrisch hierzu ein zweiter Dichtungsstreifenteil auf der angrenzenden Seite des Daches so verlegt wird, daß sein gelochter Belüftungsbereich ganz oder teilweise auf dem Belüftungsbereich des ersten Dichtungsstreifenteil liegt, und daß anschließend die aneinanderstoßenden oder überlappenden Bereiche der Dichtungsstreifenteile miteinander und/oder mit der First- oder Gratbohle verbunden werden. Ein Vorteil des Verfahrens besteht darin, daß zu einem gegebenen Zeitpunkt immer nur ein Dichtungsstreifenteil auf halber Breite zu verarbeiten ist, was eine entsprechende Gewichtsreduzierung der zu hantierenden Vorratsrolle bedeutet. In der Regel werden zu beiden Seiten des Dachfirstes identisch ausgebildete Dichtungsstreifenteil verlegt, so daß diese von ein- und derselben Rolle genommen werden können. Wenn daher das erste Dichtungsstreifenteil von einem ersten Ende des Firstes oder Grates zum zweiten Ende verlegt worden ist, kann das zweite Dichtungsstreifenteil durch Umdrehen der Vorratsrolle vom zweiten Ende des Firstes oder Grates zurück zum ersten Ende verlegt werden. Die Arbeit kann somit praktischerweise an dem Ende des Daches fortgesetzt werden, an welchem sie mit dem Verlegen des ersten Dichtungsstreifenteils aufgehört hat.

Die Verbindung der Randbereiche der Dichtungsstreifen erfolgt vorzugsweise dadurch, daß diese Randbereiche u.a. gefalzt werden oder die einander zugekehrten Randbereiche überlappen sich und werden an der First- oder Gratbohle angenagelt. Eine solche Falzverbindung ist einerseits einfach herzustellen und gewährleistet andererseits die notwendige Dichtheit und Stabilität.

Der die einzelnen Dichtungsstreifenteile bildende ebenflächige Formkörper besteht aus einem metallischen Material, wie Kupfer, Zink, Aluminium, Blei, auch im Verbund miteinander oder im Verbund mit einer Kunststoffolie oder aus einem Verbundmaterial aus einem zu Folien oder dünnen Platten strang- oder walzgepreßtem Bleigrund, und kann einseitig eine auf die Formkörperfläche aufgebrachte Beschichtung aus einer Klebemasse, bevorzugterweise aus einer auf Bitumen basierenden kattklebenden Masse aufweisen, wobei die Beschichtung außenseitig mit einem abziehbaren Schutzblatt versehen ist, wohingegen auf der beschichtungsfreien Seite des Formkörpers bzw. des Bleigrundmaterials eine Farbbeschichtung, bevorzugterweise eine Farblackschicht, aufgebracht ist.

Dieser ebenflächige Formkörper besteht des weiteren ebenfalls aus einem metallischen Material, wie Kupfer, Zink, Aluminium, Blei, auch im Verbund miteinander oder im Verbund mit einer Kunststoffolie oder aus einem Verbundmaterial aus einem zu Folien oder dünnen Platten strang- oder walzgepreßten Bleigrundmaterial und kann einseitig eine auf die Formkörperfläche aufgebrachte Beschichtung aus einer Klebemasse, bevorzugterweise aus einer auf Bitumen basierenden kaltklebenden Masse aufweisen, wobei die Beschichtung außenseitig mit einem abziehbaren Schutzblatt versehen ist und wobei der Formkörper bzw. das Verbundmaterial auf seinen beiden Seiten mit einer durchgehenden Strukturierung derart versehen ist, daß der Formkörper bzw. das Verbundmaterial in allen Raumkoordinaten verformbar und abbiegbar ist.

Eine weitere Ausführungsform umfaßt einen ebenflächigen Formkörper aus einem metallischen Material, wie Kupfer, Zink, Aluminium, Blei, auch im Verbund miteinander oder im Verbund mit einer Kunststoffolie oder aus einem Verbundmaterial aus einem zu Folien oder dünnen Platten strang- oder walzgepreßten Bleigrundmaterial und kann einseitig eine auf die Formkörperfläche aufgebrachte Beschichtung aus einer Klebemasse, bevorzugterweise aus einer auf Bitumen basierenden kaltklebenden Masse aufweisen, wobei die Beschichtung dann außenseitig mit einem abziehbaren Schutzblatt versehen ist und wobei auf der beschichtungsfreien Seite des Formkörpers bzw. des Bleigrundmaterial eine Farbbeschichtung, bevorzugterweise eine Farblackschicht, aufgebracht ist. Außerdem ist der Formkörper bzw. das Verbundmaterial auf seinen beiden Seiten mit einer durchgehenden Strukturierung derart versehen, daß der Formkörper bzw. das Verbundmaterial in allen Raumkoordinaten verformbar und abbiegbar ist.

Dichtungsstreifen bzw. Dichtungsstreifenteile, die aus derart ausgebildete Formkörpern und auch aus bleihaltigen oder nicht bleihaltigen Verbundmaterialien und auch Verbundmaterial aus Kupfer und Aluminium, insbesondere Weichaluminium oder nur aus einer Metallsorte bestehen, sind flächenmäßig mühelos verlegbar und mühelos allen Formgebungen und Abwinklungen anpaßbar. Dadurch, daß die Außenseite des Formkörpers bzw. des Verbundmaterials mit einer Farbbeschichtung versehen ist, ist eine Umgebungsanpassung möglich, wobei darüber hinaus auch diese Farbbeschichtung ein Korrosionsschutz bildet. Der Formkörper und die Verbundmaterialien sind vollflächig klebend. Ein besonderer Vorteil erbringt die Ausgestaltung des Formkörpers und des Verbundmaterials mit einer durchgehenden Strukturierung, aufgrund der der Formkörper und das Verbundmaterial in allen Richtungen verformbar und verbiegbar ist. Das z.B. bei dem Verbundmaterial eingesetzte Bleigrundmaterial kann eine geringe Stärke aufweisen und aufgrund der durchgehenden Strukturierung erhält das Verbundmaterial trotz der Geschmeidigkeit zum Verformen eine hohe Eigensteifigkeit, was auch für den Einsatz anderer Materialien zutrifft. Mit der Strukturierung auf beiden Seiten des Formkörpers bzw. des Verbundmaterials werden erhabene und eingezogene Abschnitte geschaffen, wobei durch die erhabenen Abschnitte der Strukturierung bei einer Verformung des Formkörpers bzw. des Verbundmaterials das Material in den Biegebereichen nicht ausgedünnt wird, sondern aus dem Materialvorrat, der durch die erhaben ausgebildeten Abschnitte erhalten wird, d.h. aus den Materialanhäufungen, wird beim Verformen und Abbiegen das Material genommen, so daß auch bei einem scharfkantigen Abbiegen und bei einer Verformung des Formkörpers bzw. des Bleigrundmaterials zwischenkristalline Brüche infolge Grobkornbildung vermieden werden, so daß ein Reißen der weiteren Schichten des Verbundmaterials vermieden wird.

Besonders vorteilhaft ist dabei die besondere Ausgestaltung der Strukturierung auf beiden Seiten des Formkörpers. Dabei ist die Strukturierung mit ihren erhabenen und eingezogenen, d.h. vertieft ausgebildeten Abschnitten, auf beiden Seiten des Formkörpers bzw. des Verbundmaterials so versetzt ausgebildet, daß den erhabenen Abschnitten der ersten Seite eingezogene Abschnitte der zweiten Seite gegenüberstehen und eingezogene Abschnitte der ersten Seite erhabene Abschnitte der anderen Seite des Formkörpers bzw. des Verbundmaterials gegenüberliegen. Bevorzugterweise besteht dabei die Strukturierung des Materials aus einer Kreuzplissierung durch Ausbildung von ersten linienförmigen Vertiefungen auf der die Farbbeschichtung tragenden Seite des Materials bei gleichzeitiger Ausbildung linienförmiger Erhebungen auf der das Schutzblatt tragenden Seite des Materials und durch die ersten linienförmigen Vertiefungen kreuzenden zweiten linienförmigen Vertiefungen, wobei die zweiten linienförmigen Vertiefungen auf der das Schutzblatt tragenden Seite des Materials zu den zweiten linienförmigen Vertiefungen auf der der Farbbeschichtung tragenden Seite des Materials versetzt ausgebildet sind.

Ausführungsbeispiele der Erfindung werden nachstehend anhand der Zeichnungen näher erläutert. Es zeigen:
- Fig. 1: ein Dach mit einem abzudeckenden First oder Grat;
- Fig. 2: einen Schnitt durch den First des Daches nach Fig. 1 entlang der Linie II-II;
- Fig. 3A: in einer Ansicht von oben zwei miteinander verbundenen Dichtungsstreifenteile,
- Fig. 3B: in einer schaubildlichen Ansicht zwei mit ineinandergreifenden Profilen versehene Dichtungsstreifenteile zur Breitenveränderung des Dichtungsstreifens,
- Fig. 4A: in einem vergrößerten senkrechten Schnitt einen ebenflächigen Formkörper aus einem metallischen Material mit außenseitig angebrachter Farbbeschichtung und mit einer innenseitig angebrachten Beschichtung aus einer Klebemasse,
- Fig. 4B: in einem vergrößerten senkrechten Schnitt ein bleihaltiges Verbundmaterial mit außenseitig angebrachter Farbbeschichtung und mit einer innenseitig angebrachten Beschichtung aus einer Klebemasse,
- Fig. 5: eine vergrößerte Ansicht der Vorderseite einer weiteren Ausführungsform eines bleihaltigen Verbundmaterials mit einer Oberflächenstruktur,
- Fig. 6: eine vergrößerte Ansicht der Rückseite des Verbundmaterials gemäß Fig. 5,
- Fig. 7: einen senkrechten Schnitt durch ein bleihaltiges Verbundmaterial mit beidseitig auf dem bleihaltigen Grundmaterial aufplattierten aus Zinn und Blei bestehenden Plattierungsprodukten und
- Fig. 8: einen senkrechten Schnitt durch das Plattierungsprodukt.

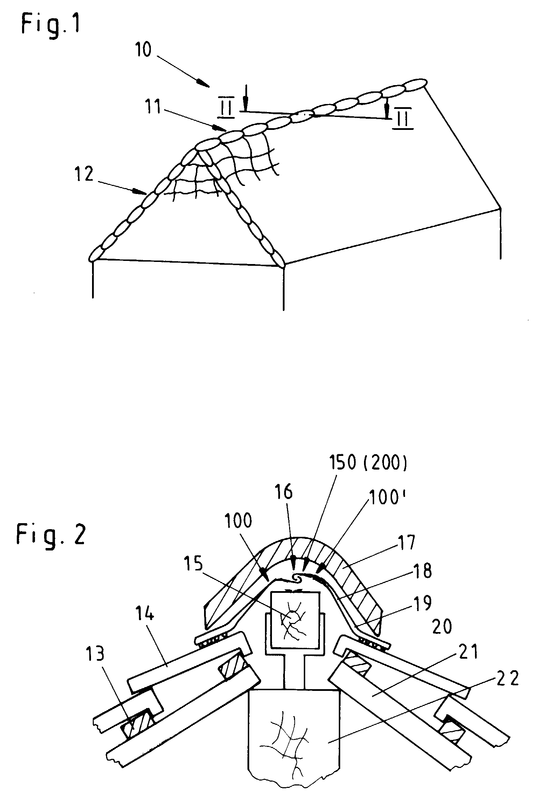

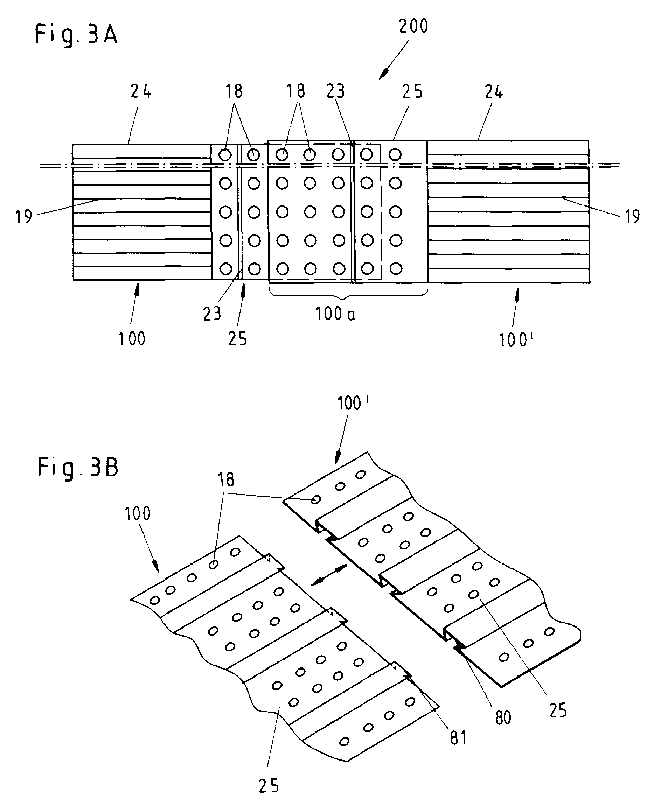

In Fig. 1 ist als Beispiel für ein Dach ein Walmdach 10 dargestellt. Dieses besitzt einen horizontal verlaufenden First 11 oder Grat, an welchem die beiden Hauptdachflächen aneinanderstoßen, sowie vier geneigt verlaufende Grate 12, an welchen die Hauptdachflächen mit den Walmflächen zusammenstoßen. Der First 11 ist nach außen hin durch Firstziegel abgedeckt, der Grat durch Gratziegel. Unterhalb dieser Ziegel sind die Stöße der jeweiligen Dachflächen durch Dichtungsstreifen abgedeckt, deren Anordnung und Aufbau aus den Fig. 2 und 3A erkenntlich wird.

Fig. 2 zeigt einen Schnitt entlang der Linie II-II durch den First 11 des in Figur 1 dargestellten Daches. Auf der in Richtung des Firstes verlaufenden Firstpfette 22 sind die Sparren 21 der rechten und der linken Dachfläche abgestützt. Auf den Sparren sind quer zu diesen in regelmäßigen Abständen die Dachlatten 13 befestigt, an welchen wiederum die Dachziegel 14 eingehängt bzw. befestigt sind. Durch die Achse des Firstes verläuft am höchsten Punkt die Firstbohle 15, welche über der Firstpfette 22 montiert ist.

Die Abdeckung und Abdichtung des bis hierher beschriebenen Firstaufbaues erfolgt durch einen zweiteilig ausgebildeten Dichtungsstreifen 200 sowie Firstziegel 17.

Dabei werden erfindungsgemäß zwei Dichtungsstreifenteile 100, 100' eingesetzt, welche in der Mitte über der Firstbohle 15 miteinander verbunden sind oder sich überlappen (Fig. 3A), um so ein einheitliches Ganzes zu bilden. Die Dichtungsstreifenteile 100, 100' können an ihrem unteren, auf den Dachziegeln 14 aufliegenden Enden über einen Klebestreifen 20 mit den Dachziegeln verbunden sein. Vor dem Ausrollen der Dichtungsstreifenteile kann diese Klebemasse dabei durch ein abziehbares Schutzblatt bedeckt sein.

Der genaue Aufbau der Dichtungsstreifenteile 100, 100' wird aus Fig. 3A erkenntlich, wo die beiden Dichtungsstreifenteile ausgebreitet und wie im montierten Zustand aneinandergefügt sind. Die beiden Dichtungsstreifenteile 100, 100' sind dabei identisch aufgebaut, jedoch spiegelbildlich zueinander angeordnet. Ein Dichtungsstreifenteil 100 bzw. 100' besteht aus zwei Bereichen, nämlich einem Formbereich 24 und einem daran angrenzenden Belüftungsbereich 25. Die die beiden Bereiche bildenden Abschnitte der Dichtungsstreifenteile 100, 100' sind miteinander verklebt, verschweißt oder über eine Falzverbindung miteinander verbunden. Der Formbereich 24 bildet die Unterseite der Firstabdeckung und liegt insbesondere auf den Dachziegeln auf. Im Rand des Formbereiches 24 kann daher der oben erwähnte Klebestreifen 20 vorgesehen sein. Von Bedeutung ist, daß der Formbereich 24 mit Plisseefalten 19 versehen ist. Hierdurch wird der Formbereich wie ein Vorhang an jeder Stelle längenmäßig um einen bestimmten Betrag streckbar, indem die dort befindlichen Falten ausgestrichen werden. Der Formbereich 24 kann somit an den Verlauf der Oberfläche der Dachsteine angepaßt werden. Diese Anpassung geschieht nach dem Auflegen des Dichtungsstreifenteils 100 durch entsprechendes Andrücken des Formbereiches an den Untergrund. In gleicher Weise wird das Dichtungsstreifenteil 100' verklebt. Im Überlappungsbereich 100a sind beide Dichtungsstreifenteile 100, 100' an der Firstbohle 15 angenagelt. Aufgrund der Plastizität des Materials der Dichtungsstreifenteile 100, 100', bei denen es sich vorzugsweise um ein Weichmetall handelt, wird dabei gewährleistet, daß die so erzeugte Form beibehalten wird und die Dichtungsstreifenteile einen festen und lückenlosen Sitz bekommen.

An den Formbereichen der Dichtungsstreifenteile 100, 100' angrenzend ist der Belüftungsbereich 25 angeordnet. Dieser enthält zahlreiche Belüftungslöcher 18, durch welche sichergestellt wird, daß zum Be- und Entlüften des Dachinnenraumes ein Luftaustausch durch die Dichtungsstreifenteile 100, 100' erfolgen kann. Der Belüftungsbereich 25 kann zur Seite hin durch einen ungelochten Rand 16 abgeschlossen, welcher in Fig. 2 mit einem entsprechenden Randstück des Dichtungsstreifensteils 100' über eine Falz verbunden ist. Zwischen den beiden Dichtungsstreifenteilen 100 und 100' entsteht somit eine feste Verbindung, die einen insgesamt symmetrisch aufgebauten Abdeckstreifen ergibt. Es ist indes auch möglich, zwei verschieden ausgestaltete oder dimensionierte Dichtungsstreifenteile miteinander zu verbinden, wenn hierdurch an die jeweilige Dachseite eine bessere Anpassung erzielt werden kann.

Durch den Belüftungsbereich 25 verläuft eine Sicke 23, welche als Markierungsstreifen beim Verlegen des Dichtungsstreifens dient. Statt einer Sikke könnte auch ein Farbstreifen, eine besonders hervorgehobene Lochreihung oder dergleichen vorgesehen sein. (Fig. 3A).

Die Breite des Formbereiches 24 beträgt vorzugsweise 60 bis 100 mm, die des Belüftungsbereiches 100 bis 150 mm. Der Durchmesser der Löcher 18 liegt typischerweise in einem Bereich von 1 bis 5 mm, so daß keine Insekten passieren können und Feuchtigkeit aufgrund der Oberflächenspannung des Wassers zurückgehalten wird. Ferner können die Löcher 18 mit einem über die Fläche des Belüftungsbereiches hochstehenden Kragen versehen sein, um den Eintritt von Wasser zu verhindern. Die Löcher 18 können jede beliebige Form aufweisen.

Die Dichtungsstreifenteile 100, 100' können eine Lackierung oder Beschichtung erhalten, welche dem Schutze des Metalls und einer passenden Farbgebung dienen. Die Farbbeschichtung ist auf beiden Seiten der Dichtungsstreifenteile 100, 100' aufgebracht und weist unterschiedliche Farben auf.

Sind die beiden Dichtungsstreifenteile 100, 100' mit ihren Belüftungsbereichen überlappend verlegt, dann ist eine Breitenvariation des Dichtungsstreifens 200 möglich. Nach Fig. 3B können jedoch die Belüftungsbereiche 25 mit ineinandergreifenden Profilierungen 80, 81 z.B. nach Art von Nut und Feder ausgebildet sind, die sehr flach gestaltet sein können. Dadurch, daß die beiden Profilierungen ineinandergreifen, ist ein gegenseitiges Verschieben der Dichtungsstreifenteile 100, 100' und somit eine beliebige Breiteneinstellung des Dichtungsatreifens möglich.

Die First- oder Gratabdeckung besteht somit aus zwei Dichtungsstreifenteilen 100, 100', die in der Mitte über der Firstbohle 15 miteinander verbunden sind. Jedes Dichtungsstreifenteil 100, 100' besteht aus einem Formkörper 150.

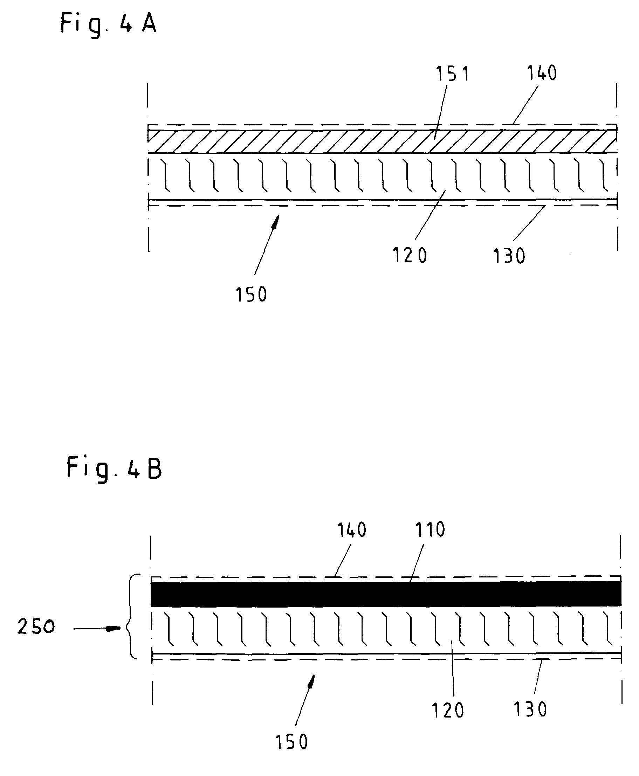

Gemäß Fig. 4A besteht der ebenflächige Formkörper 150 aus einem metallischen Material 151, wie Kupfer, Zink, Aluminium, Blei, auch im Verbund miteinander oder im Verbund mit einer Kunststoffolie oder aus einem nachstehend näher beschriebenen bleihaltigen Verbundmaterial 250. Besonders bevorzugt wird u.a. auch ein Verbundmaterial, das aus Kupfer und Aluminium, insbesondere Weichaluminium besteht. Einseitig ist der Formkörper 150 mit einer auf die Formkörperfläche oder nur in einem Teilbereich aufgebrachten Beschichtung 120 aus einer Klebemasse, die bei den Dichtungsstreifenteilen 100, 100' in deren Längsrandbereich aufgebracht sein kann, bevorzugterweise aus einer auf Bitumen basierenden kaltklebenden Masse versehen. Die Beschichtung 120 ist außenseitig mit einem abziehbaren Schutzblatt 130 versehen. Auf der beschichtungsfreien Seite des Formkörpers 150 ist eine Farbbeschichtung 140, bevorzugterweise eine Farblackschicht, aufgebracht. Die eingesetzte Farbe der Beschichtung 140 ist bevorzugterweise der Farbe der Umgebung angepaßt, in der der Formkörper verarbeitet wird. Der Formkörper 150 ist ebenflächig ausgebildet und läßt sich großflächig verlegen, wobei besonders vorteilhaft ist, daß die zu verlegende Abschnitte des Formkörpers vollflächig klebend sind. Der Formkörper kann in Form von Platten, Blechen, Folie oder Bändern vorliegen und entsprechend verwendet werden.

Gemäß Fig. 4B besteht der Formkörper 150 bevorzugterweise aus einem bleihaltigen Verbundmaterial 250 aus einem zu Folien oder dünnen Platten strang- oder walzgepreßtem Bleigrundmaterial 110, auf das einseitig vollflächig oder teilflächig ebenfalls eine Beschichtung 120 aus einer Klebemasse, bevorzugterweise aus einer auf Bitumen basierenden kaltklebenden Masse aufgebracht ist. Diese Beschichtung 120 ist außenseitig vermittels eines abziehbaren Schutzblattes 130 abgedeckt. Auf der beschichtungsfreien Seite des Bleigrundmaterials 110 ist eine Farbbeschichtung 140 aufgebracht, die beispielsweise aus einem Farblack besteht, wobei die jeweilige Farbe der Beschichtung 140 bevorzugterweise der Farbe der Umgebung angepaßt ist, in der das Verbundmaterial verarbeitet wird. Dieses Verbundmaterial 250 gemäß Fig. 4B ist ebenfalls ebenflächig ausgebildet und läßt sich großflächig verlegen, wobei besonders vorteilhaft ist, daß die zu verlegenden Abschnitte des Verbundmaterials 250 vollflächig klebend sind.

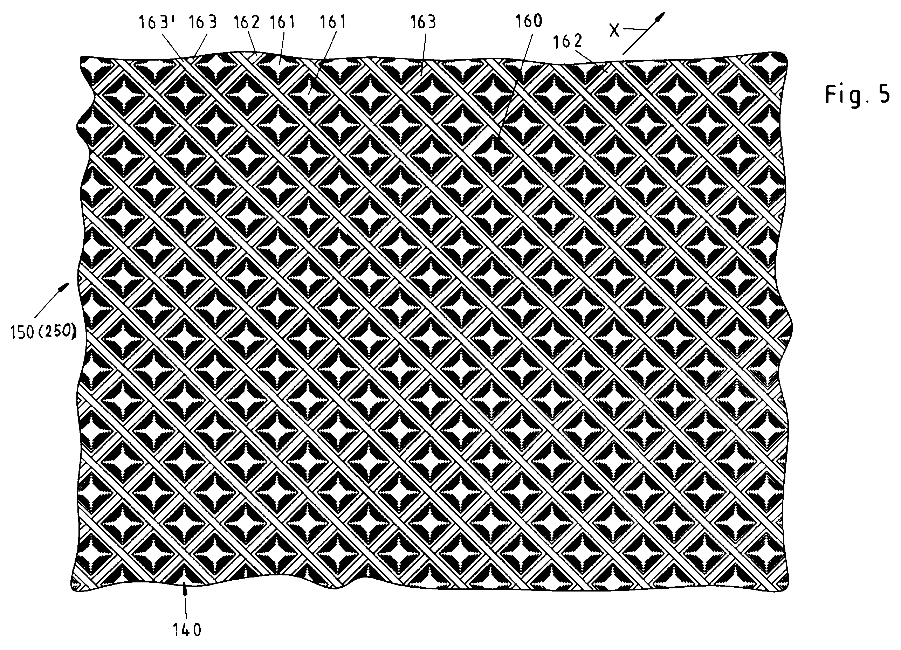

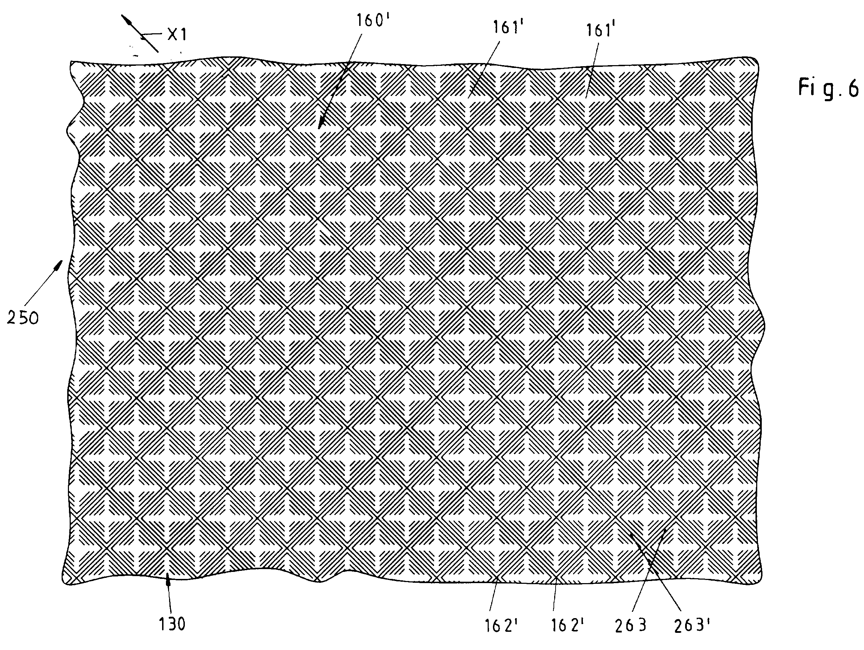

Nach einer Ausführungsform der Erfindung besteht der Formkörper 150 und/oder das Verbundmaterial 250 gemäß Fig. 5 und 6 ebenfalls aus einem zu Folien oder dünnen Platten strang- oder watzgepreßtem metallischem Material oder einem Bleigrundmaterial 110, auf das einseitig eine Beschichtung 120 aus einer Klebemasse, bevorzugterweise aus einer auf Bitumen basierenden kaltklebenden Masse aufgebracht ist. Diese Beschichtung 120 ist ebenfalls außenseitig mit einem abziehbaren Schutzblatt 130 versehen. Auf der beschichtungsfreien Seite des Formkörpers 150 bzw. des Bleigrundmaterials 110 ist ebenfalls eine Farbbeschichtung 140 aufgebracht. Dieser Formkörper 150 bzw. dieses Verbundmaterial 250 gemäß Fig. 5 und 6 unterscheidet sich von dem in Fig. 4A und 4B dargestellten Formkörper 150 bzw. Verbundmaterial 250 dadurch, daß der Formkörper 150 bzw. das Verbundmaterial 250 auf beiden Seiten mit einer durchgehenden Strukturierung 160, 160' derart versehen ist, daß das Material in allen Raumkoordinaten verformbar und abbiegbar ist. Die Strukturierung 160, 160' auf den beiden Seiten des Materials 250, 150 ist so ausgebildet, daß auf beiden Seiten erhabene Abschnitte 161, 161' und eingezogene Abschnitte 162, 162' erhalten werden.

Die Strukturierung 160, 160' mit ihren erhabenen Abschnitten 161, 161' und mit ihren eingezogenen Abschnitten 162, 162' auf den beiden Seiten des Materials ist dabei so versetzt ausgebildet, daß die jeweils erhaben ausgebildeten Abschnitte 161 bzw. 161' den jeweils eingezogenen Abschnitten 162 bzw. 162' gegenüberliegend sind. In den Fig. 5 und 6 ist die Reihe mit den erhaben ausgebildeten Abschnitten 161 auf der Vorderseite des Materials durch den Pfeil X angedeutet, während die dieser Reihe von erhabenen Abschnitten 161 zugeordnete Reihe mit den eingezogenen Abschnitte 162 der Rückseite des Materials in Fig. 6 durch den Pfeil X1 angedeutet ist. Es steht sich somit jeweils eine Reihe von erhabenen Abschnitten 161 auf der einen Seite des Materials einer Reihe von eingezogenen Abschnitte 162 der anderen Seite des Materials 250, 150 und eine Reihe von erhabenen Abschnitten 161' der einen Materialseite einer Reihe von eingezogenen Abschnitten 162' der anderen Materialseite gegenüber.

Die Strukturierung 160, 160' auf den beiden Seiten des Materials 250, 150 besteht aus einer Kreuzplissierung und zwar durch Ausbildung von sich kreuzenden linienförmigen Einziehungen 163, 163' auf der die Farbbeschichtung 140 tragenden Seite des Materials 250, 150 und durch Ausbildung von sich kreuzenden linienförmigen Einziehungen 163, 163' auf der das Schutzblatt 130 tragenden Seite des Materials, wobei die sich kreuzenden linienförmigen Einziehungen 163, 163' der einen Seite des Materials zu den sich kreuzenden linienförmigen Einziehungen 163, 163' der anderen Seite des Materials 250, 150 zueinander versetzt sind, so daß zwischen je zwei linienförmigen Einziehungen 163, 163' die erhabenen Abschnitte 161 erhalten werden, so daß den Reihen mit den erhabenen Abschnitten 161 der einen Seite des Materials eingezogene Abschnitte 162 auf der anderen Seite des Materials gegenüberstehen. Die linienförmigen Einziehungen 163, der einen Materialseite stehen sich den erhabenen Abschnitten 161' der anderen Materialseite und die linienförmigen Einziehungen 163' der einen Materialseite den erhabenen Abschnitten der anderen Materialseite gegenüber. Aufgrund dieser Kreuzplissierung werden wabenartige, erhabene und eingezogene Abschnitte erhalten, wobei die erhaben ausgebildeten Abschnitte Materialanhäufungen auf der einen Seite und auf der anderen Seite des Materials bilden, wobei die einzelnen Materialanhäufungen durch Abschnitte mit einer Materialverdünnung auf der einen Seite und einer auf der anderen Seite des Materials 250, 150 voneinander getrennt sind. Die Klebemasse kann vor der Ausbildung der Kreuzplissierung oder auf die fertige Kreuzplissierung aufgebracht werden.

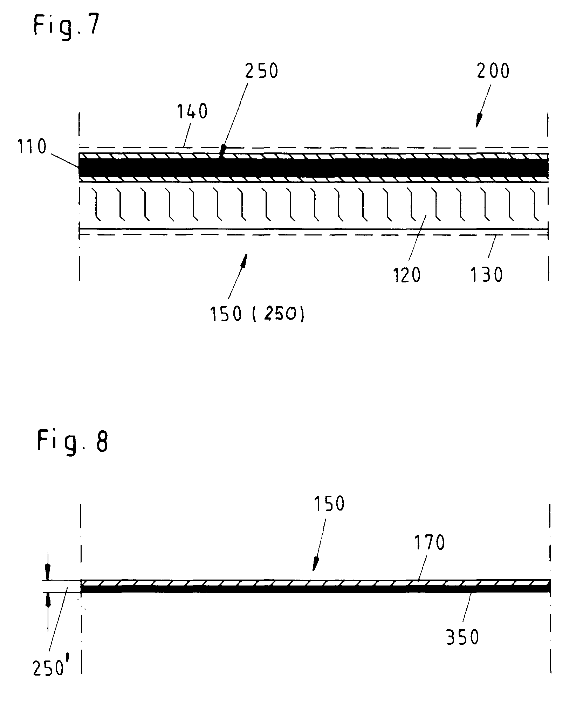

Um beim Verformen des Formkörpers 150, insbesondere des Verbundmaterials 250 ein Reißen des Bleigrundmaterials zu vermeiden, ist nach einer weiteren Ausführungsform gemäß Fig. 7 und 8 auf das Bleigrundmaterial 110 ein- oder beidseitig eine Zinnplattierungsschicht 350 aufgebracht, die aus Zinn oder einer zinnhaltigen Legierung besteht. In den Fig. 7 und 8 ist der Aufbau eines Formkörpers 150 bzw. eines Verbundmaterials 250 mit einem ein- oder beidseitig zinnplattierten bleihaltigen Grundmaterials 110 dargestellt, bei dem ein platten- oder folienförmiges Bleigrundmaterial 110 ein- oder beidseitig mit einer Plattierungsschicht 250' verbunden ist.

Das der Plattierungsschicht 250' zugrundeliegende Plattierungsprodukt besteht aus einer Bleiplatte 350, auf die einseitig eine Beschichtung 170 aus Zinn oder einer Zinnlegierung aufplattiert ist, so daß letztlich Zinn und Blei mechanisch verschweißt sind. Ein derart hergestellte Plattierungsprodukt wird auf Plattierungsstärke herabgewalzt und die so gewonnene Plattierungsschicht 250' ein- oder beidseitig auf das Bleigrundmaterial 110 so aufplattiert, daß die Bleischicht des Plattierungsproduktes auf den Bleigrundmaterial zu liegen kommt. Das Bleigrundmaterial 110, auf daß das Plattierungsprodukt bzw. die Plattierungsschicht 250' aufplattiert ist, besteht bevorzugterweise aus einer zinnhaltigen Legierung, die sich wie folgt zusammensetzt:
Sn: 0,15 bis 0,85 %
Sb: 0,05 bis 0,15 %
Cu: 0,03 bis 0,06 %
Bi: 0,01 bis 0,10 %
Sonstige Beimengungen: max.: 0,10 %
Pb: Rest.

Sowohl bei der Plattierungsschicht 250' als auch bei dem Bleigrundmaterial 110 handelt es sich um sehr dünne Schichten.

Ein ein- oder beidseitig mit einer Plattierungsschicht 250' versehenes Bleigrundmaterial 110 wird dann außenseitig mit der Farbbeschichtung 140 versehen, wohingegen die der Farbbeschichtung 140 abgewandte Seite des Bleigrundmaterials 110 mit der Beschichtung 120 aus einer Klebemasse, bevorzugterweise aus einer auf Bitumen basierenden kaltklebenden Masse versehen ist.

Die Prozentangaben beziehen sich auf Gewichtsprozent, bezogen auf das Gesamtgewicht.

Die beiden Dichtungsstreifenteile 100, 100' werden mit ihren sich überlappenden Belüftungsbereichen an der First- oder Gratbohle angenagelt. Die Belüftungsbereiche überlappen sich dabei derart, daß in den sich überlappenden Belüftungsbereichen sich die Löcher 18 des einen Dichtungsstreifenteils 100 mit den Löchern des anderen Dichtungsstreifenteils 100' decken, so daß die Belüftung nicht beeinträchtigt wird.

## Patentansprüche

1. Dichtungsstreifen (200) aus weichplastischem Werkstoff für eine First- oder Gratabdeckung mit einem zur Auflage auf einer First- oder Gratbohle (15) bestimmten und mit Löchern (18) versehenen Belüftungsbereich (25) und zu beiden Seiten daran angrenzenden Formbereichen (24), die an die Oberseite von dem First- oder Gratbereich eines Daches verlegten Dachziegeln (14) anpaßbar sind,
dadurch gekennzeichnet,
daß der die First- oder Gratabdeckung bildende Dichtungsstreifen (200) zweiteilig ausgebildet ist und aus einem ersten Dichtungsstreifenteil (100) und aus einem zweiten Dichtungsstreifenteil (100') besteht, wobei beide Dichtungsstreifenteile (100, 100') gleich ausgebildet sind und jeder Dichtungsstreifenteil (100; 100') aus einem zur Auflage auf der First- oder Gratbohle (15) bestimmten und mit Löchern versehenen Belüftungsbereich (25) und einem daran angrenzenden, mit dem Belüftungsbereich (25) verbundenen Formbereich (24) besteht, der an die Oberseite von dem First- oder Gratbereich des Daches verlegten Dachziegeln (14) anpaßbar ist, und daß die beiden Dichtungsstreifenteile (100; 100') mit sich überlappenden (100a) oder miteinander verbundenen Belüftungsbereichen (15) auf der First- oder Gratbohle (15) aufliegend angeordnet sind, so daß die Form-bereiche (24) der beiden Dichtungsstreifenteile (100, 100') zu beiden Seiten der First- oder Gratbohle (15) auf den Dachziegeln (14) aufliegend sind.

2. Dichtungsstreifen nach Anspruch 1,
dadurch gekennzeichnet,
daß jeder Dichtungsstreifenteil (100, 100') auf seinen Oberflächen mit unterschiedlichen Farbbeschichtungen versehen ist.

3. Dichtungsstreifen nach einem der Ansprüche 1 oder 2,
dadurch gekennzeichnet,
daß die beiden Dichtungsstreifenteile (100, 100') mit ihren Belüftungsbreichen (25) überlappend auf der First- oder Gratbohle (15) liegend angeordnet und mit dieser über eine Schraub- oder Nagelverbindung verbunden sind.

4. Dichtungsstreifen nach einem der Ansprüche 1 und 2,
dadurch gekennzeichnet,
daß die beiden Dichtungsstreifenteile (100, 100') im Bereich der Außenränder ihrer Belüftungsbereiche (25) über eine im Bereich der First- oder Gratbohle (15) liegende Falzverbindung (16) miteinander verbunden sind.

5. Dichtungsstreifen nach einem der Ansprüche 1 und 2,
dadurch gekennzeichnet,
daß die beiden Dichtungsstreifenteile (100, 100') zur Breitenveränderung des Dichtungsstreifens (200) mit ineinandergreifenden, quer zur Dichtungsstreifenlängsrichtung verlaufenden Profilierungen (80, 81) versehen sind.

6. Dichtungsstreifen nach einem der Ansprüche 1 bis 5,
dadurch gekennzeichnet,
daß jeder Dichtungsstreifenteil (100; 100') aus Metall, vorzugsweise aus Weichaluminium, Kupferblech, Bleiblech oder zinnplattiertem Bleiblech besteht.

7. Dichtungsstreifen nach einem der Ansprüche 1 bis 6,
dadurch gekennzeichnet,
daß der Formbereich (24) eines jeden Dichtungsstreifenteil (100; 100') eine im wesentlichen quer zur Längsachse des Dichtungsstreifens (200) ausgerichtete bzw. verlaufende Plissierung (19) aufweist.

8. Dichtungsstreifen nach einem der Ansprüche 1 bis 7,
dadurch gekennzeichnet,
daß am Rand des Formbereiches (24) ein Klebemittelstreifen (20) angeordnet ist, der vor Gebrauch vorzugsweise mit einer Schutzfolie abgedeckt ist.

9. Dichtungsstreifen nach einem der Ansprüche 1 bis 8,
dadurch gekennzeichnet,
daß parallel zur Längsachse des Dichtungsstreifens (200) und vorzugsweise durch den Belüftungsbereich (25) eines jeden Dichtungsstreifenteils (100; 100') verlaufend ein Markierungsmittel, vorzugsweise in Form einer Sicke (23) und/ oder eines Farbstreifens, angeordnet ist.

10. Dichtungsstreifen nach einem der Ansprüche 1 bis 9,
dadurch gekennzeichnet,
daß die Löcher (18) des Belüftungsbereiches (25) kreisförmig, oval oder schlitzförmig ausgebildet sind, wobei die Löcher (18) bevorzugterweise mit einem Insektengitter oder einem tüllartigen Gewebe abgedeckt sind.

11. Dichtungsstreifen nach einem der Ansprüche 1 bis 10,
dadurch gekennzeichnet,
daß die beiden einzelnen Dichtungsstreifenteile (100, 100') der streifenförmigen Firstabdeckung aus einem Formkörper, wie Platte, Blech, oder Folie bestehen, wobei der ebenflächige Formkörper (150) aus einem metallischen Material (151), wie Kupfer, Zink, Aluminium, Blei, auch im Verbund miteinander oder im Verbund mit einer Kunststoffolie oder aus einem Verbundmaterial (250) aus einem zu Folien oder dünnen Platten strang- oder walzgepreßtem Bleigrundmaterial (110) besteht.

12. Dichtungsstreifen nach einem der Ansprüche 1 bis 11,
dadurch gekennzeichnet,
daß die beiden einzelnen Dichtungsstreifenteile (100, 100') der streifenförmigen Firstabdeckung aus einem Formkörper, wie Platte, Blech, oder Folie bestehen, wobei der ebenflächige Formkörper (150) aus einem metallischem Material (151), wie Kupfer, Zink, Aluminium, Blei, auch im Verbund miteinander oder im Verbund mit einer Kunststoffolie oder aus einem Verbundmaterial (250) aus einem zu Folien oder dünnen Platten strang- oder walzgepreßtem Bleigrundmaterial (110) besteht.

13. Dichtungsstreifen nach einem der Ansprüche 1 bis 12,
dadurch gekennzeichnet,
daß die beiden einzelnen Dichtungsstreifenteile (100, 100') der streifenförmigen Firstabdeckung aus einem Formkörper, wie Platte, Blech, oder Folie bestehen, wobei der ebenflächige Formkörper (150) aus einem metallischem Material (151), wie Kupfer, Zink, Aluminium, Blei, auch im Verbund miteinander oder im Verbund mit einer Kunststoffolie oder aus einem Verbundmaterial (250) aus einem zu Folien oder dünnen Platten strang- oder walzgepreßtem Bleigrundmaterial (110) besteht, und daß der Formkörper (150) bzw. das Verbundmaterial (250) auf seinen beiden Seiten mit einer durchgehenden Strukturierung (160, 160') derart versehen ist, daß der Formkörper (150) bzw. das Verbundmaterial (250) in allen Raumkoordinaten verformbar und abbiegbar ist.

14. Dichtungsstreifen nach einem der Ansprüche 10 bis 13,
dadurch gekennzeichnet,
daß die beiden einzelnen Dichtungsstreifenteile (100, 100') einseitig eine auf die Formkörperfläche oder deren Teile aufgebrachte Beschichtung (120) aus einer Klebemasse, bevorzugterweise aus einer auf Bitumen basierenden kaltklebenden Masse aufweist, wobei die Beschichtung (120) außenseitig mit einem abziehbaren Schutzblatt (130) versehen ist, daß auf der beschichtungsfreien Seite des Formkörpers (150) bzw. des Bleigrundmaterials (110) eine Farbbeschichtung (140), bevorzugterweise eine Farblackschicht, aufgebracht ist, und daß der Formkörper (150) bzw. das Verbundmaterial (250) auf seinen beiden Seiten mit einer durchgehenden Strukturierung (160, 160') derart versehen ist, daß der Formkörper (150) bzw. das Verbundmaterial (250) in allen Raumkoordinaten verformbar und abbiegbar ist.

15. Dichtungsstreifen nach einem der Ansprüche 1 bis 14,
dadurch gekennzeichnet,
daß die Dichtungsstreifenteile (100, 100') keine Klebmittelbeschichtung aufweisen.

16. Dichtungsstreifen nach einem der Ansprüche 10 bis 15,
dadurch gekennzeichnet,
daß die Strukturierungen (160, 160') mit ihren erhaben ausgebildeten Abschnitten (161; 161') und mit ihren eingezogenen Abschnitten (162; 162') auf beiden Seiten des Formkörpers (150) bzw. des Verbundmaterials (250) so versetzt ausgebildet sind, daß die erhabenen Abschnitte (161; 161') der jeweils einen Seite des Formkörpers bzw. des Verbundmaterials den eingezogenen Abschnitten (162; 162') der jeweils anderen Seite des Formkörpers bzw. Verbundmaterials gegenüberliegen.

17. Dichtungsstreifen nach einem der Ansprüche 10 bis 15,
dadurch gekennzeichnet,
daß die Strukturierungen (160, 160') auf den beiden Seiten des Formkörpers (150) bzw. des Verbundmaterials (250) aus Kreuzplissierungen bestehen, die durch Ausbildung von sich kreuzenden linienförmigen Einziehungen (163; 163') auf der einen Seite des Formkörpers bzw. des Verbundmaterials und von sich kreuzenden linienförmigen Einziehungen (263, 263') auf der anderen Seite des Formkörpers bzw. des Verbundmaterials gebildet werden, so daß Abschnitte mit Materialanhäufung und Abschnitte mit Materialverdünnung auf den beiden Oberflächen des Formkörpers (150) bzw. des Verbundmaterials (250) erhalten werden, wobei linienförmige Einziehungen der einen Materialseite Materialanhäufungen der anderen Materialseite gegenüberstehen.

18. Dichtungsstreifen nach einem der Ansprüche 10 bis 17,
dadurch gekennzeichnet,
daß auf das Bleigrundmaterial (110) des Verbundmaterials (250) ein- oder beidseitig eine Plattierungsschicht (250') aus Zinn oder einer zinnhaltigen Legierung oder aus einer Bleiplatte (350) und Zinn oder einer zinnhaltigen Legierung aufgebracht ist.

19. Dichtungsstreifen nach Anspruch 18,
dadurch gekennzeichnet,
daß die zinnhaltige Legierung der Plattierungsschicht (250') des Verbundmaterials (250) aus folgender Zusammensetzung besteht:
Sn: 0,15 bis 0,85 %
Sb: 0,05 bis 0,15 %
Cu: 0,03 bis 0,06 %
Bi: 0,01 bis 0,10 %
Sonstige Beimengungen: max.: 0,10 %
Pb: Rest.

20. Dichtungsstreifen nach Anspruch 19,
dadurch gekennzeichnet,
daß das Bleigrundmaterial (110) des Verbundmaterials (250) ein- oder beidseitig mit einem Plattierungsprodukt aus einer einseitig mit einer Plattierung (170) aus Zinn oder einer Zinn-legierung versehenen mit einer auf Plattierungsstärke herabgewalzten Bleiplatte (350) versehen ist, wobei das Plattierungsprodukt mit seiner Bleiseite auf das Bleigrundmaterial (110) aufplattiert ist, das zur Verhinderung zwischenkristallinier Brüche bei einer Bleiblechverformung aus einer zinnhaltigen Legierung mit folgender Zusammensetzung besteht:
Sn: 0,15 bis 0,85 %
Sb: 0,05 bis 0,15 %
Cu: 0,03 bis 0,06 %
Bi: 0,01 bis 0,10%
Sonstige Beimengungen: max.: 0,10 %
Pb: Rest.

21. Verfahren zur Abdichtung einer First- oder Gratabdeckung (11, 12) unter Verwendung eines zweiteiligen Dichtungsstreifenteils (100, 100') nach einem der Ansprüche 1 bis 20,
dadurch gekennzeichnet,
daß zunächst auf einer Seite des Daches ein erster Dichtungsstreifenteil (100) so verlegt wird, daß der gelochte Belüftungsbereich (25) auf der First- oder Gratbohle (15) aufliegt, daß dann spiegelsymmetrisch hierzu ein zweiter Dichtungsstreifenteil (100') auf der angrenzenden Seite des Daches so verlegt wird, daß sein gelochter Belüftungsbereich (25) ganz oder teilweise auf dem Belüftungsbereich (25) des ersten Dichtungsstreifenteil (100) liegt und daß anschließend die aneinanderstoßenden oder überlappenden Bereiche der Dichtungsstreifenteile (100, 100') miteinander und/oder mit der First- oder Gratbohle (15) verbunden werden.

22. Verfahren nach Anspruch 21,
dadurch gekennzeichnet,
daß die beiden Dichtungsstreifenteile (100, 100') vollflächig oder teilflächig in ihren Längsrandbereichen mit einer quer zur Streifenlängsrichtung verlaufenden Plissierung oder mit einer Kreuzplissierung versehen werden.
